# EUROPEAN PATENT APPLICATION

(11) **EP 4 763 881 A1**
(43) Date of publication of application: **24.06.2026**
(21) Application number: 24901168.5
(22) Date of filing: 14.03.2024
(51) Int. Cl.: C08G 18/32, C08G 18/76, C08G 18/79, C08G 18/20, B60C 19/00, B60C 5/00, B29C 44/18

(54) **LOW-NOISE TIRE, TIRE INNER POLYURETHANE FOAM SOUND-ABSORBING LINING COMPOSITION FOR MANUFACTURING SAME, AND TIRE INNER POLYURETHANE FOAM SOUND-ABSORBING LINING METHOD USING SAME**

(30) Priority: 04.12.2023 KR 20230173468
(71) Applicant: Kim, Heung Tae, Suwon-si, Gyeonggi-do 16688 (KR); Nexen Tire Corporation, Yangsan-si, Gyeongsangnam-do 50592 (KR)
(72) Inventor: KIM, Ki Man, Daejeon 34061 (KR); EOM, Jae Bok, Hwaseong-si Gyeonggi-do 18361 (KR); NA, Jae Bong, Seoul 07594 (KR); KIM, Heung Tae, Suwon-si Gyeonggi-do 16688 (KR)
(74) Representative: Isarpatent
(86) International application number: PCT/KR2024/095509
(87) International publication number: WO 2025/121982

(57) **Abstract**

The present invention relates to a low-noise tire, a tire inner polyurethane foam sound-absorbing lining composition for manufacturing same, and a tire inner polyurethane foam sound-absorbing lining method using same. More specifically, the present invention relates to a low-noise tire, a tire inner polyurethane foam sound-absorbing lining composition for manufacturing same, and a tire inner polyurethane foam sound-absorbing lining method using same, wherein in order to reduce cavity resonance noise, which occurs as vibration forces generated between the tire tread and road surface are transmitted to the cavity space inside the tire and the axle, leading to interior noise, a liquid foaming polyurethane composition is conveniently, rapidly, and precisely applied in a liquid foam spraying manner to the inner surface of the tire, which corresponds to the tire tread, and cured to form a polyurethane sound-absorbing lining, whereby the low-noise tire exhibits improved low-noise performance.

## Description

### [Technical Field]

The present invention relates to a low-noise tire, a polyurethane foam sound-absorbing lining composition for an inner portion of a tire for manufacturing the same, and a method of forming a polyurethane foam sound-absorbing lining inside a tire using the same, and more particularly, to a low-noise tire, a polyurethane foam sound-absorbing lining composition for an inner portion of a tire for manufacturing the same, and a method of forming a polyurethane foam sound-absorbing lining inside a tire using the same, in which, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, thereby improving low-noise performance of the tire.

### [Background Art]

Recently, with the widespread adoption of electric vehicles, there is a growing demand to reduce not only interior noise but also noise caused by tire tread patterns, as one approach to improving vehicle quality by enhancing ride comfort and ensuring a more comfortable driving environment.

Among such noises, low-frequency cavity resonance noise in the range of 200 to 250 Hz, which is generated when excitation force produced between a tire tread and a road surface during driving is transmitted to an interior cavity of the tire and an axle and manifested as interior noise, occurs as a sound having a sharp peak inside the vehicle, causing discomfort to a driver and reducing ride comfort.

In particular, with the advent of electric vehicles having little to no engine noise, and as tire specifications mounted on vehicles increasingly tend toward lower aspect ratios and larger rim diameters, tire cavity resonance noise has emerged as a more critical concern.

With regard to conventional technologies for reducing tire cavity resonance noise, Korean Patent No. 10-1439558 (Registration date: September 02, 2014) discloses a noise reduction device for a tire formed by fixing a flexible polyurethane foam to a ring-shaped band member, in which the flexible polyurethane foam has a density of 7 to 40 kg/m³ and a tear strength of 0.39 to 0.70 N/cm per unit density (kg/m³), and the noise reduction device is maintained on an inner surface of the tire and is detachably mounted on the tire.

In addition, Korean Patent No. 10-1993303 (Registration date: June 20, 2019) discloses a pneumatic tire provided with a noise reduction member, including a pneumatic tire 2, a body ply 6 configured to form a skeleton of the tire 2 in parallel with an inner liner 8 on a lower side of a tread 4 of the tire 2 that contacts a road surface, a rim 20 mounted to the tire 2 through a bead portion 10 that is turned up and wrapped by the body ply 6, and a noise reduction member 30 laminated in an interior region between the body ply 6 and the inner liner 8 disposed at shoulder portions 16 formed on both left (L) and right (R) sides in a width direction with respect to a center line (CL) of the tire 2, the noise reduction member being arranged in an annular shape segmented at predetermined intervals along a circumferential direction, in order to reduce cavity resonance noise generated in a cavity 12 between the tire 2 and the rim 20, in which the noise reduction member 30 is formed by laminating at least one selected from among a noise-proof tape, a noise-proof rubber plate, and a noise-proof fiber tape, or by laminating a combination of a plurality thereof.

In addition, Korean Patent No. 10-2075314 (Registration date: February 03, 2020) discloses a tire for reducing cavity resonance noise, in which two to four block-shaped porous foamed sound-absorbing members are attached to an inner surface of a tire at angular intervals of 90 degrees in a circumferential direction, and the porous foamed sound-absorbing members are made of porous melamine resin foam.

Here, the porous foamed sound-absorbing member has an octahedral block shape having a top horizontal length of 10 to 40 mm, a bottom horizontal length of 100 to 180 mm, a vertical length of 100 to 180 mm, heights at both ends of 10 to 20 mm, and a central height of 25 to 75 mm, and the porous foamed sound-absorbing member includes six rectangular faces and two hexagonal faces, any one of the six rectangular faces is in contact with and attached to the inner surface of the tire, a longitudinal direction of the porous foamed sound-absorbing member coincides with a circumferential direction of the tire, the porous foamed sound-absorbing member has a volume of 36x10⁴ mm³, and the porous foamed sound-absorbing member is attached to the inner surface of the tire using a thermoplastic polyacrylic adhesive.

In addition, Korean Patent No. 10-2127660 (Registration date: June 23, 2020) discloses a pneumatic tire including a tread portion 100, a sidewall portion 200, and a bead portion 300, the pneumatic tire including a sound-absorbing member 350 attached to an inner surface of the tread portion 100 of the pneumatic tire; and a sound-insulating membrane 400 fixedly supported by the sound-absorbing member 350 so as to divide an interior of the pneumatic tire in a cross-sectional direction together with the sound-absorbing member 350, in which the sound-absorbing member 350 is formed as a pair of ring shapes each having a predetermined spacing from a side surface of the tread portion 100 and being formed in a circular shape along a circumferential direction of the tread portion 100.

In addition, Korean Patent Application Publication No. 10-2021-0091400 (Laid-open date: July 22, 2021) discloses a pneumatic tire including a tread portion 100, a sidewall portion 200, and a bead portion 300, in which an inner liner 400 is installed on an inner surface of the pneumatic tire, a space portion 500 is formed between the tread portion 100 and the inner liner 400, and a filler 600 is positioned in the space portion 500.

In addition, Korean Patent No. 10-2460711 (Registration date: October 25, 2022) discloses a foam tape for a sound-absorbing tire including a release film, a pressure-sensitive adhesive layer formed on a lower surface of the release film, a base film formed on a lower surface of the pressure-sensitive adhesive layer, an adhesive layer formed on a lower surface of the base film, and a porous sound-absorbing material layer formed on a lower surface of the adhesive layer, in which the pressure-sensitive adhesive layer includes an acrylic pressure-sensitive adhesive, a weight average molecular weight of the pressure-sensitive adhesive included in the pressure-sensitive adhesive layer is 200,000 to 2,000,000, a weight average molecular weight of the adhesive included in the adhesive layer is 1,000 to 80,000, the acrylic pressure-sensitive adhesive includes an alkyl acrylate having 4 to 17 carbon atoms, and the sound-absorbing material layer includes polyurethane foam.

However, the conventional technologies described above employ a method in which polyurethane foam as a sound-absorbing material is cut to a desired size and then attached to an inner circumferential surface of a tire, and in order to attach the polyurethane foam, a primer is applied onto the inner circumferential surface of the tire and then the polyurethane foam is manually attached by an operator.

Specifically, the method includes molding polyurethane foam, applying a primer or an adhesive onto an inner surface of the tire to enhance adhesion of the molded polyurethane foam to the inside of the tire, and attaching the molded polyurethane foam to the inner circumferential surface of the tire.

Such a method requires multiple production steps, resulting in a long processing time, increased production costs, and reduced productivity, and in cases where the polyurethane foam is improperly attached, problems such as imbalance during tire rotation or separation of the polyurethane foam from the tire may occur.

Moreover, the polyurethane foam attached to the tire has a narrow and elongated shape with a width of about 10 cm, which makes manual attachment to the inside of the tire difficult, thereby reducing productivity and increasing the likelihood of defects due to improper attachment.

In order to address the above-described problems, a method has been developed in which polyurethane foam is sprayed and foamed in a liquid state to form a foam lining inside the tire.

However, since strong adhesion between rubber, which is a main component of a tire, and polyurethane foam, which is an organic chemical material, cannot be achieved using a general adhesive, a primer is applied onto an inner surface of the tire and then lining foaming is performed to form polyurethane foam as a liner; however, when the primer is not sufficiently applied onto an interface between the inner surface of the tire and the polyurethane foam, or when the tire undergoes rapid acceleration and rapid deceleration, separation between the tire and the polyurethane foam may occur due to differences in inertial force.

In addition, when a foam lining is formed inside the tire by spraying and foaming polyurethane foam in a liquid state, if overlap or spacing occurs at a start point and an end point of the lining, detachment may occur due to variations in lining weight and distribution, and low-noise performance may deteriorate due to tire vibration.

In particular, electric vehicles have very high torque and vastly superior rapid acceleration and rapid deceleration performance compared to conventional diesel or gasoline vehicles, and thus the above-described problems are further exacerbated.

### [Disclosure]

### [Technical Problem]

The present invention has been made keeping in mind the problems encountered in the related art, and an object of the present invention is to provide a low-noise tire, a polyurethane foam sound-absorbing lining composition for an inner portion of a tire for manufacturing the same, and a method of forming a polyurethane foam sound-absorbing lining inside a tire using the same, in which, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, thereby improving low-noise performance of the tire.

### [Technical Solution]

In order to accomplish the above object, the present invention provides a polyurethane foam sound-absorbing lining composition for an inner portion of a tire, in which, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, in which the polyurethane foam sound-absorbing lining composition includes, based on 100 parts by weight of a polyol premix composition including 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer, 50 to 60 parts by weight of a mixed MDI (methylene diphenyl diisocyanate) curing agent composition including 4 to 70 wt% of monomeric MDI (MMDI), 4 to 70 wt% of carbodiimide-containing MDI (CMDI), and 10 to 80 wt% of polymeric MDI (PMDI).

The crosslinking agent may be triethanolamine (OH value = 1,500 to 2,500 mgKOH/g).

The urethane curing reaction catalyst may be a mixture including 33 wt% of triethylene diamine and 66 wt% of dipropylene glycol.

The blowing catalyst may be diethyl toluene diamine (DETDA).

The foam stabilizer may be a polyether-modified polysiloxane.

In addition, the present invention provides a method of forming a polyurethane foam sound-absorbing lining inside a tire, including preparing a polyol premix composition including 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer; preparing a mixed MDI (methylene diphenyl diisocyanate) curing agent composition including 4 to 70 wt% of monomeric MDI (MMDI), 5 to 70 wt% of carbodiimide-containing MDI (CMDI), and 10 to 80 wt% of polymeric MDI (PMDI); preparing a polyurethane foam sound-absorbing lining composition for an inner portion of a tire, the composition being in a liquid state, by introducing, based on 100 parts by weight of the polyol premix composition, 50 to 60 parts by weight of the curing agent composition into a foaming mixer chamber followed by mixing; and forming a polyurethane foam sound-absorbing lining by spraying and foaming the polyurethane foam sound-absorbing lining composition in a liquid state onto an inner surface of a tire corresponding to a tire tread followed by curing.

Here, spraying and foaming the polyurethane foam sound-absorbing lining composition in a liquid state onto the inner surface of the tire may be performed at a predetermined discharge rate for a predetermined period of time corresponding to one revolution onto the inner surface of the tire rotating at a constant speed by a foaming spray nozzle spaced apart from the inner surface of the tire by a predetermined distance.

Also, spraying and foaming the polyurethane foam sound-absorbing lining composition in a liquid state onto the inner surface of the tire may include marking a start point and an end point for spraying and foaming on the inner surface of the tire using a laser pointer, such that the polyurethane foam sound-absorbing lining does not overlap or become spaced apart at the start point and the end point.

The method may include forming pores in a cured film formed on a surface of the polyurethane foam sound-absorbing lining that is formed by spraying and foaming the polyurethane foam sound-absorbing lining composition in a liquid state onto the inner surface of the tire followed by curing, by punching with a needle brush or by logo-design punching using a logo-designed needle brush.

In addition, the present invention provides a low-noise tire manufactured by the method described above.

### [Advantageous Effects]

The present invention provides a low-noise tire, a polyurethane foam sound-absorbing lining composition for an inner portion of a tire for manufacturing the same, and a method of forming a polyurethane foam sound-absorbing lining inside a tire using the same, in which, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, thereby improving low-noise performance of the tire.

### [Brief description of Drawings]

FIG. 1 shows a start position of a process of forming a polyurethane foam sound-absorbing lining according to the present invention;

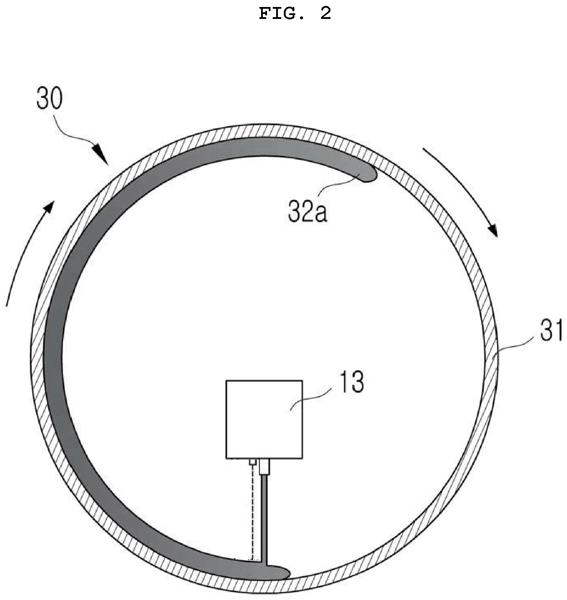

FIG. 2 shows a rotation state of the process of forming a polyurethane foam sound-absorbing lining according to the present invention;
FIG. 3 shows an end position of the process of forming a polyurethane foam sound-absorbing lining according to the present invention; and
FIG. 4 is a cross-sectional view showing an interior of a low-noise tire according to the present invention.

### [Best Mode]

Hereinafter, the present invention will be described in detail with reference to embodiments and/or drawings so that a person having ordinary skill in the art to which the present invention pertains can easily practice the same. However, the present invention may be implemented in various different forms and is not limited to the embodiments and/or drawings described herein.

An aspect of the present invention provides a polyurethane foam sound-absorbing lining composition for an inner portion of a tire, in which, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, in which the polyurethane foam sound-absorbing lining composition includes, based on 100 parts by weight of a polyol premix composition including 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer, 50 to 60 parts by weight of a mixed MDI (methylene diphenyl diisocyanate) curing agent composition including 4 to 70 wt% of monomeric MDI (MMDI), 4 to 70 wt% of carbodiimide-containing MDI (CMDI), and 10 to 80 wt% of polymeric MDI (PMDI).

Here, the polyurethane resin used in the polyurethane foam sound-absorbing lining composition is a flexible foam obtained by reacting a urethane foam composition containing a polyol, a polyisocyanate, a catalyst, a crosslinking agent, a foam stabilizer, and a blowing agent, in which the polyol has a hydroxyl functional group (-OH) and the polyisocyanate has an isocyanate functional group (-NCO) within the molecule.

Polyols may be classified into monools, diols, triols, and the like depending on the number of functional groups in the molecule, and isocyanates may also be classified into monoisocyanates, diisocyanates, and the like depending on the number of functional groups per molecule.

In order to prepare a polymeric polyurethane resin, polyols and isocyanates having two or more functional groups are generally used, and during the reaction, each component forms a urethane group through a reaction between functional groups at molecular terminals. As represented by [Scheme 1] below, a polymer having a large number of such urethane groups in the molecule is referred to as polyurethane.

[Scheme 1] R-NCO + R'-OH → [R-NH-COO-R']

Water reacted with an isocyanate forms carbamic acid having an unstable structure, which is immediately decomposed into an amine and carbon dioxide (CO₂) ([Scheme 2]).

[Scheme 2] R-NCO + H₂O → R-NH₂ + CO₂

The amine again reacts with an isocyanate to form a urea group ([Scheme 3]), and the carbon dioxide gas generated by the decomposition creates fine cells in the polyurethane resin, thereby finally forming a cellular structure dispersed in the polyurethane.

[Scheme 3] R-NH₂ + R'-NCO → [R-NH-CO-NH-R']

The polyurethane foam is widely used as a material for automotive parts due to excellent properties such as low density, high mechanical properties, and high heat resistance.

The polyurethane foam sound-absorbing lining composition used in the present invention is a polyol premix composition including 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer.

As such, polyols account for at least 60% of the polyol premix composition, and a single polyol is not used alone; instead, various types of polyols are used depending on product characteristics and production conditions. The polyols are produced by chemical bonding of an initiator with PO (propylene oxide) and EO (ethylene oxide).

When an initiator such as glycerol (or glycerine), trimethylolpropane (TMP), triethanolamine (TEOA), 1,2,6-hexanetriol, phosphoric acid, or triisopropanolamine is used, a triol (functionality = 3) having three hydroxyl groups (-OH) is produced.

As such, the OH value is determined depending on the degree of PO/EO capping, which is related to the molecular weight of the chemically bonded polyol, and polyols having an OH value in a range of 20 to 60 mgKOH/g are used to manufacture polyurethane foam serving as a material for automotive parts. Triol products account for the largest portion of mixed polyols, and at least 60% must be used in order to satisfy required properties such as flowability and moldability of raw materials and hardness.

In addition, vibration absorption performance of urethane foam varies depending on the molecular weight of the polyol, and in the present invention, polyols having an OH value of 40 or less are mainly used, and several additional polyols in which PO and EO contents are adjusted are used together in order to induce room-temperature curability and prevent foam shrinkage.

According to a preferred embodiment of the present invention, recommended amounts of the polyols are such that polyol 1 (glycerol, OH value = 10 to 30 mgKOH/g) is used in an amount of 3 to 40 wt%, polyol 2 (glycerol, OH value = 31 to 40 mgKOH/g) is used in an amount of 40 to 70 wt%, polyol 3 (glycerol, OH value = 41 to 50 mgKOH/g) is used in an amount of 10 to 40 wt%, and polyol 4 (glycerol, OH value = 51 to 60 mgKOH/g) is used in an amount of 5 to 30 wt%, in a mixed manner.

Polyol 1 is used in an amount of 3.0 to 40 wt%. If the amount thereof is less than 3 wt%, hardness may decrease, whereas if the amount thereof exceeds 40 wt%, hardness may increase, reducing vibration absorption performance.

In particular, polyol 1 is a polyol to which a styrene monomer solid is added, and is used in an amount of at most 40 wt%, because the content of the solid (30 to 50%) affects hardness, cell opening characteristics, and viscosity of raw materials.

Polyol 2 is preferably used in an amount of 40.0 to 70.0 wt%. If the amount thereof is less than 40 wt%, rebound resilience may significantly decrease, whereas if the amount thereof exceeds 70 wt%, a decrease in hardness may occur.

Polyol 3 is preferably used in an amount of 10.0 to 40.0 wt%. If the amount thereof is less than 10 wt%, a vibration transmission rate may increase, whereas if the amount thereof exceeds 40 wt%, compression set may decrease.

Polyol 4 is preferably used in an amount of 5.0 to 30.0 wt%. If the amount thereof is less than 5 wt%, a vibration transmission rate may increase, whereas if the amount exceeds 30 wt%, elasticity and compression set may decrease.

Meanwhile, the chain extender is used as a mixture including chain extender 1 (diethanolamine, OH value = 1,500 to 2,500 mgKOH/g) and chain extender 2 (1,4-butanediol, OH value = 500 to 1,500 mgKOH/g), and the crosslinking agent is triethanolamine (OH value = 1,500 to 2,500 mgKOH/g).

The reason for using the chain extender and the crosslinking agent is that required properties of the product cannot be satisfied by polyols alone, and since physical and mechanical properties such as tensile strength and tear strength exhibit different tendencies depending on the use of chain extender and crosslinking agent during product manufacture, these components are essential raw materials that must be added.

The use of the chain extender and the crosslinking agent may increase intermolecular crosslinking strength, thereby playing an important role in improving general physical properties such as tensile strength and tear strength, and at the same time enhancing hydrolysis resistance, so that product properties may be maintained under high-temperature and high-humidity conditions.

However, if only the required properties of the final product are satisfied, productivity may decrease due to closed-cell formation and flowability issues. Accordingly, chain extender 1 (diethanolamine, OH value = 1,500 to 2,500 mgKOH/g) is used in an amount of 1 to 10 wt%. If the amount thereof is less than 1 wt%, tensile strength and tear strength may deteriorate, whereas if the amount thereof exceeds 10 wt%, excessive closed-cell formation may occur, sharply reducing productivity.

Chain extender 2 (1,4-butanediol, OH value = 500 to 1,500 mgKOH/g) is used in an amount of 0.1 to 1 wt%. If the amount thereof exceeds 1 wt%, flowability may decrease.

The crosslinking agent, triethanolamine (OH value = 1,500 to 2,500 mgKOH/g), is used in an amount of 1 to 5 wt%. If the amount thereof exceeds 5 wt%, flowability may decrease, increasing a defect rate.

Also, a polyurethane reaction proceeds through a process in which two liquid materials come into contact and are converted into a solid, and is not carried out only by a reaction between isocyanate and polyol. Catalysts required to lower activation energy of these two reactions are a urethane curing reaction catalyst and a blowing catalyst. Stable production of a polyurethane foam product is achievable depending on the respective amounts of the two catalysts used.

The urethane curing reaction catalyst is a mixture including 33 wt% of triethylene diamine and 66 wt% of dipropylene glycol and is used in an amount of 0.1 to 3 wt%.

The blowing catalyst is diethyl toluene diamine (DETDA) and is used in an amount of 0.1 to 2 wt%.

In order for the polyurethane foam sound-absorbing lining of the present invention to be cured within a limited time, the urethane curing reaction catalyst is used in an amount of at most 3 wt%, and the blowing catalyst is used in an amount of at most 2 wt%.

The recommended amounts of the urethane curing reaction catalyst and the blowing catalyst are 0.1 to 3.0 wt% and 0.1 to 2.0 wt%, respectively. If the amounts thereof are less than the recommended lower limits, curability may deteriorate, resulting in reduced productivity, whereas if the amounts thereof exceed the recommended upper limits, flowability may decrease, which may cause pore defects.

The blowing agent is broadly classified into a physical blowing agent and a chemical blowing agent, and herein refers to a chemical blowing agent. Since the amount of the blowing agent determines the reaction rate, curability, and free rise density, the amount is determined depending on production conditions in the range of at most 5 wt%. In the present invention, water is used as the blowing agent.

In general, the blowing agent is used in an amount of 1.0 to 5.0 wt%. If the amount thereof is less than 1.0 wt%, the foaming ratio may decrease, making it impossible to achieve the required density. On the other hand, if the amount thereof exceeds 5.0 wt%, all physical properties may deteriorate due to excessive foaming.

The foam stabilizer is a polyether-modified polysiloxane, and provides an emulsifying action that assists the reaction between MDI and the polyol, lowers surface tension to form fine cells, and further stabilizes these fine cells. The amount of the foam stabilizer is determined depending on production conditions in the range of at most 3%.

In general, the foam stabilizer is used in an amount of 0.1 to 3.0 wt%. If the amount thereof is less than 0.1 wt%, urethane foam may not be formed, whereas if the amount thereof exceeds 3.0 wt%, excessive closed-cell formation may occur, resulting in reduced productivity.

Meanwhile, in the present invention, the polyisocyanate is a mixed MDI including 4 to 70 wt% of monomeric MDI (MMDI), 4 to 70 wt% of carbodiimide-containing MDI (CMDI), and 10 to 80 wt% of polymeric MDI (PMDI).

Each of the raw materials has inherent characteristics in terms of hardness, flowability, and curability, and by combining these characteristics with one another, a desired chemical bonding structure may be achieved.

In particular, in order to maximize vibration absorption, it is necessary to use monomeric MDI (MMDI) in an amount of 4 to 70 wt%, carbodiimide-containing MDI (CMDI) in an amount of 4 to 70 wt%, and polymeric MDI (PMDI) in an amount of 10 to 80 wt%.

The amounts of monomeric MDI (MMDI) and carbodiimide-containing MDI (CMDI) are each in the range of 4 to 70 wt%. If the amounts thereof are less than 4 wt%, excessive closed-cell formation may occur, impairing productivity, whereas if the amounts thereof exceed 70 wt%, excessive open-cell formation may occur, preventing proper foam formation and increasing the defect rate.

Polymeric MDI (PMDI) is generally used in an amount of 10.0 to 80.0 wt%. If the amount thereof is less than 10 wt%, tensile strength and tear strength may decrease sharply, whereas if the amount thereof exceeds 80 wt%, hardness may increase sharply.

In addition, another aspect of the present invention provides a method of forming a polyurethane foam sound-absorbing lining inside a tire, including preparing a polyol premix composition including 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer, preparing a mixed MDI (methylene diphenyl diisocyanate) curing agent composition including 4 to 70 wt% of monomeric MDI (MMDI), 5 to 70 wt% of carbodiimide-containing MDI (CMDI), and 10 to 80 wt% of polymeric MDI (PMDI), preparing a polyurethane foam sound-absorbing lining composition for an inner portion of a tire, the composition being in a liquid state, by introducing, based on 100 parts by weight of the polyol premix composition, 50 to 60 parts by weight of the curing agent composition into a foaming mixer chamber followed by mixing, and forming a polyurethane foam sound-absorbing lining 32 by spraying and foaming the polyurethane foam sound-absorbing lining composition in a liquid state onto an inner surface of a tire 31 corresponding to a tire tread followed by curing.

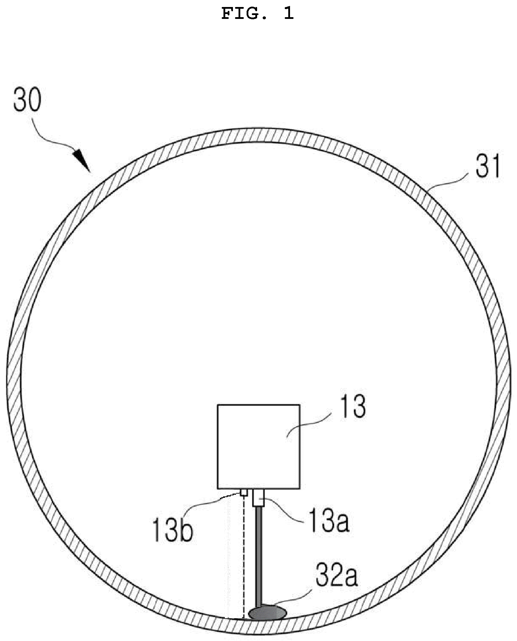

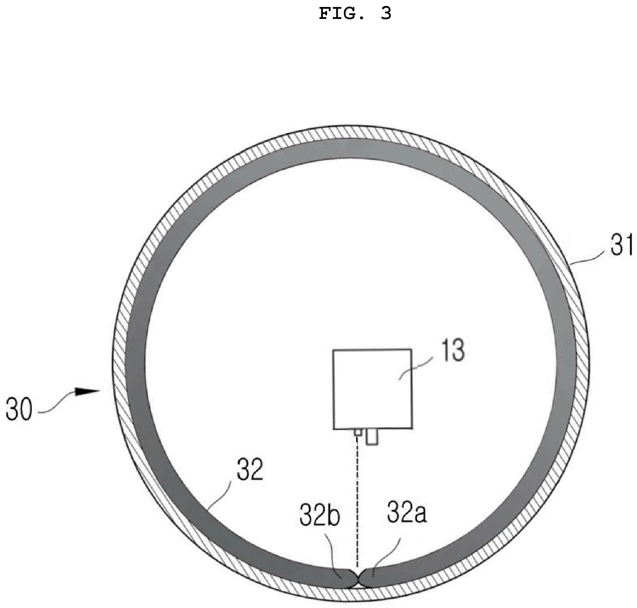

As such, as shown in [FIG. 1] to [FIG. 3], spraying and foaming the polyurethane foam sound-absorbing lining composition in a liquid state onto the inner surface of the tire 31 is performed at a predetermined discharge rate for a predetermined period of time corresponding to one revolution onto the inner surface of the tire rotating at a constant speed by a foaming spray nozzle 13a of a foaming head 13 spaced apart from the inner surface of the tire by a predetermined distance.

In particular, it is important that, during spraying and foaming of the polyurethane foam sound-absorbing lining composition in a liquid state onto the inner surface of the tire, a start point 32a and an end point 32b for spraying and foaming are marked on the inner surface of the tire using a laser pointer 13b, such that the polyurethane foam sound-absorbing lining 32 does not overlap or become spaced apart at the start point and the end point.

Optionally, the method may include forming pores in a cured film formed on the surface of the polyurethane foam sound-absorbing lining 32 that is formed by spraying and foaming the polyurethane foam sound-absorbing lining composition in a liquid state onto the inner surface of the tire followed by curing, by punching with a needle brush or by logo-design punching using a logo-designed needle brush.

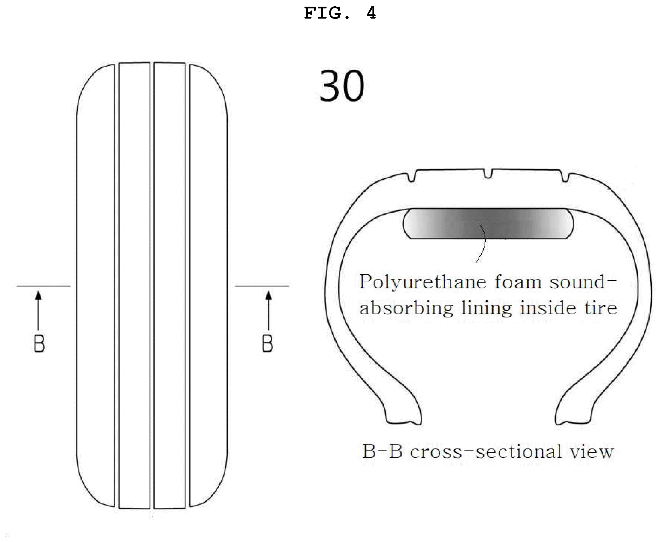

In addition, still another aspect of the present invention provides, as shown in [FIG. 4], a low-noise tire 30 including a polyurethane foam sound-absorbing lining lined with the polyurethane foam sound-absorbing lining composition for an inner portion of a tire, or manufactured by the method of forming a polyurethane foam sound-absorbing lining inside a tire.

The above description is merely illustrative of the technical spirit of the present invention, and various modifications and variations may be made by those skilled in the art to which the present invention pertains without departing from the essential characteristics of the present invention. Accordingly, the embodiments and/or drawings disclosed herein are intended to explain, rather than limit, the technical spirit of the present invention, and the scope of the technical spirit of the present invention should not be construed as being limited by such embodiments and/or drawings. The scope of protection of the present invention should be interpreted based on the claims set forth below, and all technical ideas within the scope equivalent thereto should be construed as being included in the scope of rights of the present invention.

### [Industrial Applicability]

The present invention provides a low-noise tire, a polyurethane foam sound-absorbing lining composition for an inner portion of a tire for manufacturing the same, and a method of forming a polyurethane foam sound-absorbing lining inside a tire using the same, in which, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, thereby improving low-noise performance of the tire, ultimately exhibiting industrial applicability.

## Claims

1. A polyurethane foam sound-absorbing lining composition for an inner portion of a tire, wherein, in order to reduce cavity resonance noise generated when excitation force occurring between a tire tread and a road surface during driving is transmitted to an interior cavity of the tire and an axle and manifested as interior noise, a polyurethane foam sound-absorbing lining is formed by simply, rapidly, and precisely spraying and foaming a polyurethane foam sound-absorbing lining composition in a liquid state onto an inner surface of the tire corresponding to the tire tread followed by curing, wherein the polyurethane foam sound-absorbing lining composition comprises, based on 100 parts by weight of a polyol premix composition comprising 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer, 50 to 60 parts by weight of a mixed MDI (methylene diphenyl diisocyanate) curing agent composition comprising 4 to 70 wt% of monomeric MDI (MMDI), 4 to 70 wt% of carbodiimide-containing MDI (CMDI), and 10 to 80 wt% of polymeric MDI (PMDI).

2. The polyurethane foam sound-absorbing lining composition according to claim 1,
wherein the crosslinking agent is triethanolamine (OH value = 1,500 to 2,500 mgKOH/g).

3. The polyurethane foam sound-absorbing lining composition according to claim 1, wherein the urethane curing reaction catalyst is a mixture comprising 33 wt% of triethylene diamine and 66 wt% of dipropylene glycol.

4. The polyurethane foam sound-absorbing lining composition according to claim 1, wherein the blowing catalyst is diethyl toluene diamine (DETDA).

5. The polyurethane foam sound-absorbing lining composition according to claim 1, wherein the foam stabilizer is a polyether-modified polysiloxane.

6. A method of forming a polyurethane foam sound-absorbing lining inside a tire using the polyurethane foam sound-absorbing lining composition according to any one of claims 1 to 5, comprising:
preparing a polyol premix composition comprising 3 to 40 wt% of polyol 1 (glycerol, OH value = 10 to 30 mgKOH/g), 40 to 70 wt% of polyol 2 (glycerol, OH value = 31 to 40 mgKOH/g), 10 to 40 wt% of polyol 3 (glycerol, OH value = 41 to 50 mgKOH/g), 5 to 30 wt% of polyol 4 (glycerol, OH value = 51 to 60 mgKOH/g), 1 to 10 wt% of chain extender 1 (diethanolamine, OH value = 1,500 to 2,500 mgKOH/g), 0.1 to 1 wt% of chain extender 2 (1,4-butanediol, OH value = 500 to 1,500 mgKOH/g), 0.1 to 5 wt% of a crosslinking agent, 1 to 5 wt% of a blowing agent (water), 0.1 to 3 wt% of a urethane curing reaction catalyst, 0.1 to 1 wt% of a blowing catalyst, and 0.1 to 3 wt% of a foam stabilizer;
preparing a mixed MDI (methylene diphenyl diisocyanate) curing agent composition comprising 4 to 70 wt% of monomeric MDI (MMDI), 5 to 70 wt% of carbodiimide-containing MDI (CMDI), and 10 to 80 wt% of polymeric MDI (PMDI);
preparing a polyurethane foam sound-absorbing lining composition for an inner portion of a tire, the composition being in a liquid state, by introducing, based on 100 parts by weight of the polyol premix composition, 50 to 60 parts by weight of the curing agent composition into a foaming mixer chamber followed by mixing; and
forming a polyurethane foam sound-absorbing lining by spraying and foaming the polyurethane foam sound-absorbing lining composition in a liquid state onto an inner surface of a tire corresponding to a tire tread followed by curing.

7. The method according to claim 6, wherein spraying and foaming the polyurethane foam sound-absorbing lining composition in a liquid state onto the inner surface of the tire is performed at a predetermined discharge rate for a predetermined period of time corresponding to one revolution onto the inner surface of the tire rotating at a constant speed by a foaming spray nozzle spaced apart from the inner surface of the tire by a predetermined distance.

8. The method according to claim 7, wherein spraying and foaming the polyurethane foam sound-absorbing lining composition in a liquid state onto the inner surface of the tire comprises marking a start point and an end point for spraying and foaming on the inner surface of the tire using a laser pointer, such that the polyurethane foam sound-absorbing lining does not overlap or become spaced apart at the start point and the end point.

9. The method according to claim 6, comprising forming pores in a cured film formed on a surface of the polyurethane foam sound-absorbing lining that is formed by spraying and foaming the polyurethane foam sound-absorbing lining composition in a liquid state onto the inner surface of the tire followed by curing, by punching with a needle brush or by logo-design punching using a logo-designed needle brush.

10. A low-noise tire comprising a polyurethane foam sound-absorbing lining lined with the polyurethane foam sound-absorbing lining composition according to any one of claims 1 to 5.

11. A low-noise tire manufactured by the method according to any one of claims 6 to 9.
